# EUROPEAN PATENT APPLICATION

(11) **EP 4 755 829 A1**
(43) Date of publication of application: **10.06.2026**
(21) Application number: 25220168.6
(22) Date of filing: 02.12.2025
(51) Int. Cl.: B65H 1/04, B65H 1/14, B65H 3/06, B65H 7/02, B65H 7/18

(54) **SHEET CONVEYING DEVICE, IMAGE PROCESSING APPARATUS, AND SHEET CONVEYING METHOD CAPABLE OF PREVENTING NEXT SHEET OF SHEET TO BE FED FROM BEING CONVEYED BEYOND SHEET FEED NIP PORTION**

(30) Priority: 03.12.2024 JP 2024209921
(71) Applicant: KYOCERA Document Solutions Inc., Osaka-shi, Osaka 540-8585 (JP)
(72) Inventor: Kurahashi, Taro, Osaka-shi, 540-8585 (JP)
(74) Representative: Plougmann Vingtoft a/s

(57) **Abstract**

A sheet conveying device includes a pickup roller (24), a conveying member (25), a separation roller (26), and a lowering processing portion (56). The pickup roller (24) rotates in a first direction (D1) capable of conveying a sheet lifted by a lift portion (22) in a conveying direction (D10). The conveying member (25) rotates in a second direction (D2) capable of conveying the sheet conveyed by the pickup roller (24) in the conveying direction (D10). The separation roller (26) forms, together with the conveying member (25), a sheet feed nip portion (26A) therebetween, and rotates in a fourth direction (D4) opposite to a third direction (D3) capable of conveying the sheet in the conveying direction (D10). The lowering processing portion (56) lowers the lift portion (22) after the leading edge in the conveying direction (D10) of the sheet has passed through the sheet feed nip portion (26A).

## Description

### BACKGROUND

The present disclosure relates to a sheet conveying device, an image processing apparatus, and a sheet conveying method.

A sheet conveying device such as an auto document feeder (ADF) that conveys a document sheet is known. The sheet conveying device includes a sheet placing portion, a lift portion, a pickup roller, a conveying member, and a separation roller. A sheet is placed on the sheet placing portion. The lift portion is provided so as to be able to move up and down in the sheet placing portion, and lifts the sheet placed on the sheet placing portion. The pickup roller is provided above the sheet placing portion and rotates in a first direction capable of conveying the uppermost sheet among one or more sheets lifted by the lift portion in a predetermined conveying direction. The conveying member is provided so that it can come into contact with the upper surface of the sheet downstream of the pickup roller in the conveying direction, and rotates in a second direction capable of conveying the sheet conveyed by the pickup roller in the conveying direction. The separation roller forms, together with the conveying member, a sheet feed nip portion therebetween, and rotates in a fourth direction opposite to a third direction capable of conveying the sheet conveyed by the pickup roller in the conveying direction.

In the sheet conveying device, first sheet feed processing for feeding the sheet is executed after the sheet placed on the sheet placing portion is lifted by the lift portion. In the first sheet feed processing, the pickup roller, the conveying member, and the separation roller are rotated in the first direction, the second direction, and the fourth direction, respectively. The separation roller is rotated in the fourth direction to separate another sheet attached to the sheet to be fed from the sheet to be fed. The first sheet feed processing is terminated when the leading edge of the sheet to be fed has passed through a registration roller pair disposed downstream of the sheet feed nip portion in the conveying direction.

Further, there is known, as a related art, a sheet conveying device that executes second sheet feed processing for feeding the sheet after the lift portion lifts the sheet placed on the sheet placing portion and lowers the lift portion during execution of the second sheet feed processing. In the second sheet feed processing, the pickup roller, the conveying member, and the separation roller are rotated in the first direction, the second direction, and the third direction, respectively.

### SUMMARY

A sheet conveying device according to an aspect of the present disclosure includes a sheet placing portion, a lift portion, a pickup roller, and a conveying member, a separation roller, a sheet feed processing portion, a first determination processing portion, and a lowering processing portion. A sheet is placed on the sheet placing portion. The lift portion is provided so as to be able to move up and down in the sheet placing portion, and lifts the sheet placed on the sheet placing portion. The pickup roller is provided above the sheet placing portion and rotates in a first direction capable of conveying the uppermost sheet among one or more sheets lifted by the lift portion in a predetermined conveying direction. The conveying member is provided so that it can come into contact with the upper surface of the sheet downstream of the pickup roller in the conveying direction, and rotates in a second direction capable of conveying the sheet conveyed by the pickup roller in the conveying direction. The separation roller forms, together with the conveying member, a sheet feed nip portion therebetween, and rotates in a fourth direction opposite to a third direction capable of conveying the sheet conveyed by the pickup roller in the conveying direction. The sheet feed processing portion executes sheet feed processing for rotating the pickup roller, the conveying member, and the separation roller in the first direction, the second direction, and the fourth direction, respectively. The first determination processing portion determines whether or not the leading edge in the conveying direction of the sheet conveyed by the sheet feed processing has passed through the sheet feed nip portion. The lowering processing portion lowers the lift portion after the first determination processing portion determines that the leading edge in the conveying direction of the sheet has passed through the sheet feed nip portion and before the sheet feed processing is completed.

An image processing apparatus according to an aspect of the present disclosure includes the sheet conveying device and an image reading portion. The image reading portion reads an image of the sheet conveyed by the sheet conveying device.

A sheet conveying method according to another aspect of the present disclosure is executed by a sheet conveying device includes a sheet placing portion, a lift portion, a pickup roller, a conveying member, a separation roller. A sheet is placed on the sheet placing portion. The lift portion is provided so as to be able to move up and down in the sheet placing portion, and lifts the sheet placed on the sheet placing portion. The pickup roller is provided above the sheet placing portion and rotates in a first direction capable of conveying the uppermost sheet among one or more sheets lifted by the lift portion in a predetermined conveying direction. The conveying member is provided so that it can come into contact with the upper surface of the sheet downstream of the pickup roller in the conveying direction, and rotates in a second direction capable of conveying the sheet conveyed by the pickup roller in the conveying direction. The separation roller forms, together with the conveying member, a sheet feed nip portion therebetween, and rotates in a fourth direction opposite to a third direction capable of conveying the sheet conveyed by the pickup roller in the conveying direction. The sheet conveying method includes executing, determining, and lowering. In executing, sheet feed processing for rotating the pickup roller, the conveying member, and the separation roller in the first direction, the second direction, and the fourth direction, respectively, is executed. In determining, whether or not the leading edge in the conveying direction of the sheet conveyed by the sheet feed processing has passed the sheet feed nip portion is determined. In lowering, the lift portion is lowered after it is determined that the leading edge in the conveying direction of the sheet has passed through the sheet feed nip portion and before the sheet feed processing is completed

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a block diagram showing a system configuration of an image forming apparatus according to an embodiment of the present disclosure.
FIG. 2 shows configurations of an ADF and an image reading portion of the image forming apparatus according to the embodiment of the present disclosure.
FIG. 3 is a flowchart showing an example of document sheet conveying processing executed in the image forming apparatus according to the embodiment of the present disclosure.

### DETAILED DESCRIPTION

Hereinafter, an embodiment of the present disclosure will be described with reference to the accompanying drawings. It is noted that the following embodiment is an example of embodying the present disclosure and does not limit the technical scope of the present disclosure.

### [Configuration of Image Forming Apparatus 100]

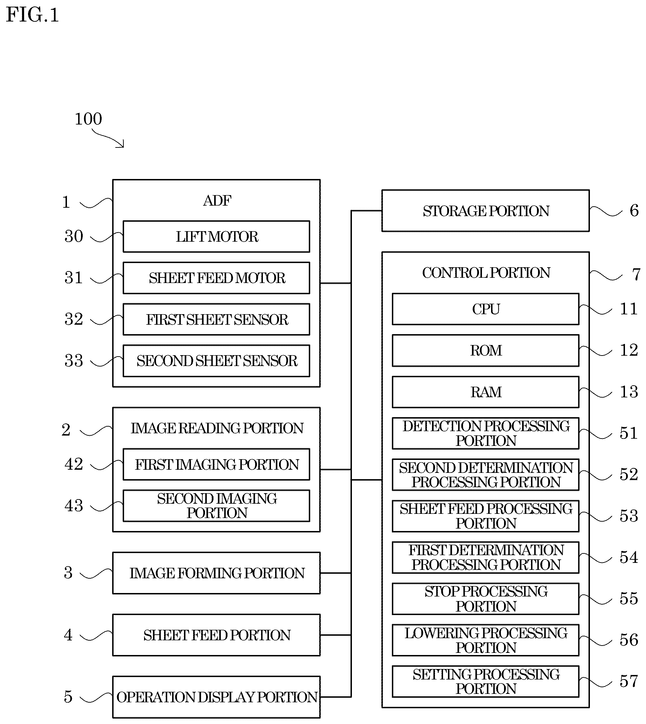

First, a configuration of an image forming apparatus 100 according to the embodiment of the present disclosure will be described with reference to FIG. 1.

The image forming apparatus 100 is a multifunction peripheral having a plurality of functions such as a facsimile function and a copy function in addition to a scan function for reading an image from a document sheet and a print function for forming an image based on image data. The image forming apparatus 100 is an example of the image processing apparatus of the present disclosure. It is noted that the image processing apparatus of the present disclosure may be a scanner, a facsimile machine, a copier, or the like.

As shown in FIG. 1, the image forming apparatus 100 includes an auto document feeder (ADF) 1, an image reading portion 2, an image forming portion 3, a sheet feed portion 4, an operation display portion 5, a storage portion 6, and a control portion 7.

The ADF 1 conveys a document sheet (an example of the sheet of the present disclosure) to be read by the scan function.

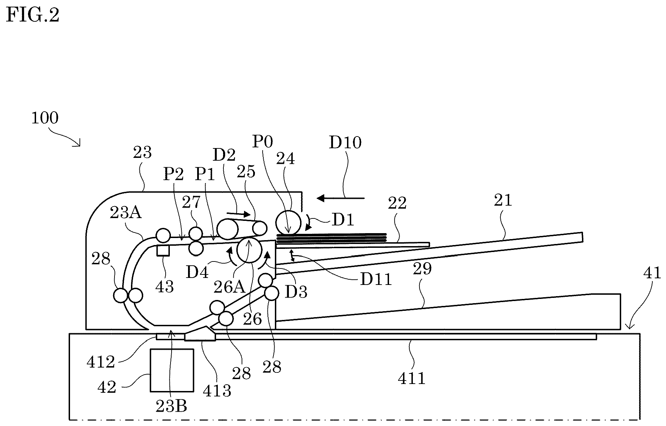

The image reading portion 2 implements the scan function. Specifically, the image reading portion 2 reads an image from a document sheet conveyed by the ADF 1. In addition, the image reading portion 2 reads an image from a document sheet placed on a document sheet table 41 (see FIG. 2).

The image forming portion 3 implements the print function. For example, the image forming portion 3 forms an image on a sheet supplied from the sheet feed portion 4, using electrophotographic method. For example, the image forming portion 3 includes a photoconductor drum, a charging device, a laser scanning unit, a developing device, a transfer device, a cleaning device, a fixing device, and a sheet discharge tray.

The sheet feed portion 4 supplies a sheet to the image forming portion 3. For example, the sheet feed portion 4 includes a sheet feed cassette, a manual feed tray, a sheet conveying path, and a plurality of conveying rollers.

The operation display portion 5 is a user interface of the image forming apparatus 100. The operation display portion 5 includes a display portion and an operation portion. The display portion displays various types of information in response to control instructions from the control portion 7. For example, the display portion is a display device such as a liquid crystal display. The operation portion inputs various types of information to the control portion 7 in response to user operations. For example, the operation portion is an operation device including an operation key and a touch panel.

The storage portion 6 is a nonvolatile storage device. For example, the storage portion 6 is a flash memory.

The control portion 7 performs overall control of the image forming apparatus 100. As shown in FIG. 1, the control portion 7 includes a CPU 11, a ROM 12, and a RAM 13. The CPU 11 is a processor that executes various types of arithmetic processing. The ROM 12 is a nonvolatile storage device in which information such as control programs for causing the CPU 11 to execute various processes are stored in advance. The RAM 13 is a volatile or nonvolatile storage device used as a temporary storage memory (work area) for various processes executed by the CPU 11. The CPU 11 performs overall control of the image forming apparatus 100 by executing various control programs stored in the ROM 12 in advance.

It is noted that the control portion 7 may be a control portion provided separately from a main control portion that performs overall control of the image forming apparatus 100. In addition, the control portion 7 may be composed of an electronic circuit such as an integrated circuit (ASIC).

### [Configurations of ADF 1 and Image Reading Portion 2]

Next, configurations of the ADF 1 and the image reading portion 2 will be described with reference to FIG. 1 and FIG. 2. Here, FIG. 2 is a cross-sectional view showing the configurations of the ADF 1 and the image reading portion 2.

As shown in FIG. 2, the ADF 1 includes a document sheet placing portion 21, a lift plate 22, a housing 23, a pickup roller 24, a sheet feed belt 25, a separation roller 26, a registration roller pair 27, a plurality of conveying roller pairs 28, and a document sheet discharge portion 29. In addition, the ADF 1 includes a lift motor 30, a sheet feed motor 31, a first sheet sensor 32, and a second sheet sensor 33 shown in FIG. 1.

A document sheet to be conveyed is placed on the document sheet placing portion 21. In the ADF 1, the document sheet placed on the document sheet placing portion 21 is conveyed in a conveying direction D10 shown in FIG. 2. The document sheet placing portion 21 is an example of the sheet placing portion according to the present disclosure.

The lift plate 22 is provided so as to be able to move up and down in the document sheet placing portion 21. Specifically, the lift plate 22 is supported such that its downstream end in the conveying direction D10 is swingable about an axis extending in a direction orthogonal to the conveying direction D10. Thus, the lift plate 22 can swing along the swing direction D11 shown in FIG. 2. The lift plate 22 receives a driving force supplied from the lift motor 30 to swing along the swing direction D11. The lift plate 22 lifts one or more document sheets placed on the document sheet placing portion 21 until the uppermost document sheet of the one or more document sheets comes into contact with the pickup roller 24. It is noted that, in FIG. 2, each of the document sheets lifted by the lift plate 22 is indicated by a thick line. The lift plate 22 is an example of the lift portion of the present disclosure.

The housing 23 houses a roller and the like used to convey a document sheet. As shown in FIG. 2, a document sheet conveying path 23A for guiding a document sheet from the document sheet placing portion 21 to the document sheet discharge portion 29 is formed inside the housing 23. In the ADF 1, a document sheet placed on the document sheet placing portion 21 is conveyed along the document sheet conveying path 23A.

As shown in FIG. 2, an opening 23B is provided at the bottom of the housing 23. The opening 23B exposes a part of the document sheet conveying path 23A to the outside. In the opening 23B, a first imaging portion 42 (see FIG. 1 and FIG. 2) of the image reading portion 2 reads the image of the document sheet conveyed by the ADF 1.

The pickup roller 24 is provided above the document sheet placing portion 21. The pickup roller 24 receives a driving force supplied from the sheet feed motor 31, and rotates in a first direction D1 (see FIG. 2) capable of conveying the uppermost document sheet of the one or more document sheets lifted by the lift plate 22 in the conveying direction D10 (an example of the predetermined conveying direction of the present disclosure). The pickup roller 24 rotates in the first direction D1 while in contact with a document sheet lifted by the lift plate 22, thereby applying, to the document sheet, a conveying force capable of moving the document sheet in the conveying direction D10.

The sheet feed belt 25 is provided on the document sheet conveying path 23A. Further, the sheet feed belt 25 is provided so that it can contact the upper surface of the document sheet downstream of the pickup roller 24 in the conveying direction D10. The sheet feed belt 25 receives a driving force supplied from the sheet feed motor 31, and rotates in a second direction D2 (see FIG. 2) capable of conveying the document sheet conveyed by the pickup roller 24 in the conveying direction D10. By the sheet feed belt 25 rotating in the second direction D2 while in contact with the upper surface of the document sheet, it is possible to apply, to the document sheet, a conveying force capable of moving the document sheet in the conveying direction D10. The sheet feed belt 25 is an example of the conveying member of the present disclosure. It is noted that the conveying member of the present disclosure is not limited to a belt-like member, and may be a roller-like member.

The separation roller 26 is provided below the sheet feed belt 25 in contact with the sheet feed belt 25. The separation roller 26 and the sheet feed belt 25 form a sheet feed nip portion 26A (see FIG. 2) therebetween. The separation roller 26 receives a driving force supplied from the sheet feed motor 31, and rotates in a fourth direction D4 (see FIG. 2) opposite to a third direction D3 (see FIG. 2) capable of conveying the document sheet conveyed by the pickup roller 24 in the conveying direction D10. By the separation roller 26 rotating in the fourth direction D4 while in contact with the lower surface of another document sheet attached to the document sheet to be fed, it is possible to apply, to the other document sheet, a conveying force capable of moving the other document sheet in a direction opposite to the conveying direction D10. It is noted that, when the separation roller 26 is in contact with the lower surface of the document sheet to be fed, the supply of the driving force to the separation roller 26 is stopped by a torque limiter provided on the transmission path of the driving force from the sheet feed motor 31 to the separation roller 26. In this case, the separation roller 26 is driven to rotate in the third direction D3 by receiving a driving force supplied from the sheet feed belt 25 via the document sheet to be fed.

The registration roller pair 27 is provided downstream of the sheet feed nip portion 26A in the conveying direction D10 on the document sheet conveying path 23A. The registration roller pair 27 receives a driving force supplied from a conveyance motor (not shown) provided separately from the sheet feed motor 31, and conveys the document sheet conveyed by the sheet feed belt 25 in the conveying direction D10.

The plurality of conveying roller pairs 28 are provided along the conveying direction D10 in a section of the document sheet conveying path 23A downstream of the registration roller pair 27 in the conveying direction D10. Each of the conveying roller pairs 28 receives a driving force supplied from the conveyance motor and conveys a document sheet in the conveying direction D10.

The document sheet conveyed along the document sheet conveying path 23A is discharged to the document sheet discharge portion 29.

The lift motor 30 is a motor that supplies a driving force to the lift plate 22.

The sheet feed motor 31 is a motor that supplies a driving force to the pickup roller 24, the sheet feed belt 25, and the separation roller 26.

The first sheet sensor 32 detects a document sheet at a first detection position P1 (see FIG. 2) downstream of the sheet feed nip portion 26A in the conveying direction D10 and upstream of the registration roller pair 27 in the conveying direction D10. For example, the first sheet sensor 32 is a reflective optical sensor. The first sheet sensor 32 is an example of the sheet sensor of the present disclosure.

The second sheet sensor 33 detects a document sheet at a second detection position P2 (see FIG. 2) downstream of the registration roller pair 27 in the conveying direction D10 and upstream of a second imaging portion 43 (see FIG. 2) in the conveying direction D10. For example, the second sheet sensor 33 is a reflective optical sensor.

As shown in FIG. 1 and FIG. 2, the image reading portion 2 includes a document sheet table 41, a first imaging portion 42, and a second imaging portion 43.

A document sheet to be read is placed on the document sheet table 41. The document sheet table 41 is provided at the top of the housing of the image forming apparatus 100. The ADF 1 is provided so as to be openable and closable with respect to the document sheet table 41, and also serves as a document sheet cover that supports one surface of the document sheet placed on a first contact glass 411 (see FIG. 2) of the document sheet table 41.

As shown in FIG. 2, the document sheet table 41 includes a first contact glass 411, a second contact glass 412, and a guide member 413. A document sheet whose image is to be read by the first imaging portion 42 is placed on the first contact glass 411. When the ADF 1 is closed with respect to the document sheet table 41, the second contact glass 412 and the guide member 413 face the opening 23B of the housing 23 to form a part of the document sheet conveying path 23A. The second contact glass 412 transmits light emitted from the first imaging portion 42 toward the opening 23B and light reflected by the document sheet. The guide member 413 guides the document sheet downstream in the conveying direction D10 downstream in the conveying direction D10 of the second contact glass 412.

The first imaging portion 42 is provided below the first contact glass 411 and the second contact glass 412. The first imaging portion 42 is long in the depth direction of the paper surface in FIG. 2, and is provided so as to be movable in the left-right direction of the paper surface in FIG. 2. The first imaging portion 42 reads an image of the front surface of the document sheet conveyed by the ADF 1 in a state where it is disposed below the second contact glass 412. Specifically, the first imaging portion 42 includes a contact image sensor (CIS) and a housing that houses the CIS. The first imaging portion 42 outputs an analog signal corresponding to the image read from the front surface of the document sheet. The analog signal output from the first imaging portion 42 is converted into a digital signal (image data) by an analog front-end circuit (not shown), and is input to the control portion 7.

The second imaging portion 43 is provided downstream in the conveying direction D10 of the registration roller pair 27 on the document sheet conveying path 23A, and upstream in the conveying direction D10 of the conveying roller pair 28 disposed at the uppermost position in the conveying direction D10 among the plurality of conveying roller pairs 28. The second imaging portion 43 reads an image on the back surface of the document sheet conveyed along the document sheet conveying path 23A. Specifically, the second imaging portion 43 is a CIS. The second imaging portion 43 outputs an analog signal corresponding to the image read from the back surface of the document sheet. The analog signal output from the second imaging portion 43 is converted into a digital signal (image data) by the analog front-end circuit, and is input to the control portion 7.

In the image forming apparatus 100, after the lift plate 22 lifts the document sheet placed on the document sheet placing portion 21, first sheet feed processing for feeding the document sheet is executed. In the first sheet feed processing, the pickup roller 24, the sheet feed belt 25, and the separation roller 26 are rotated in the first direction D1, the second direction D2, and the fourth direction D4, respectively. By rotating in the fourth direction D4, the separation roller 26 separates another document sheet attached to the document sheet to be fed from the document sheet to be fed. The first sheet feed processing is terminated when the second sheet sensor 33 detects that the leading edge of the document sheet to be fed has passed through the second detection position P2 (see FIG. 2).

In a conventional image forming apparatus, when a small-sized document sheet such as a business card is fed in the first sheet feed processing, the trailing edge of the document sheet to be fed may pass through an application position P0 (see FIG. 2) at which the pickup roller 24 applies a conveying force to the document sheet before the end of the first sheet feed processing. In this case, a conveying force is applied to the next document sheet by the pickup roller 24 before the end of the first sheet feed processing. Here, when the next document sheet has reached the sheet feed nip portion 26A by being attached to the document sheet to be fed, the next document sheet is conveyed beyond the sheet feed nip portion 26A by receiving the conveying force, and the detection of the trailing edge of the document sheet to be fed by the first sheet sensor 32 may be hindered. It is noted that the application position P0 is a position of a lower end of the outer peripheral portion of the pickup roller 24.

On the other hand, there is known, as a related art, a sheet conveying device that executes second sheet feed processing for, after the lift plate 22 lifts a document sheet placed on the document sheet placing portion 21, feeding the document sheet, and lowers the lift plate 22 during the execution of the second sheet feed processing. In the second sheet feed processing, the pickup roller 24, the sheet feed belt 25, and the separation roller 26 are rotated in the first direction D1, the second direction D2, and the third direction D3, respectively. In the sheet conveying device according to the related art, the lift plate 22 is lowered during the execution of the second sheet feed processing; therefore, it is possible to disable the document sheet conveying function of the pickup roller 24 before the trailing edge of the document sheet to be fed passes through the application position P0 (see FIG. 2).

However, in the sheet conveying device according to the related art described above, the separation roller 26 is rotated in the third direction D3; therefore, when the next document sheet is attached to the document sheet to be fed, the next document sheet cannot be separated from the document sheet to be fed.

On the other hand, in the image forming apparatus 100 according to the embodiment of the present disclosure, as described below, it is possible to prevent the next document sheet of the document sheet to be fed from being conveyed beyond the sheet feed nip portion 26A.

### [Configuration of Control Portion 7]

Next, the configuration of the control portion 7 will be described in more detail below with reference to FIG. 1 and FIG. 2.

As shown in FIG. 1, the control portion 7 includes a detection processing portion 51, a second determination processing portion 52, a sheet feed processing portion 53, a first determination processing portion 54, a stop processing portion 55, a lowering processing portion 56, and a setting processing portion 57.

Specifically, the ROM 12 of the control portion 7 stores in advance a document sheet conveyance program for causing the CPU 11 to function as the respective processing portions described above. By executing the document sheet conveyance program stored in the ROM 12, the control portion 7 functions as the processing portions described above. Here, the device including the ADF 1 and the control portion 7 is an example of the sheet conveying device of the present disclosure.

It is noted that the document sheet conveyance program may be recorded on a computer-readable recording medium such as a CD, a DVD, or a flash memory, and may be read from the recording medium and stored in a storage device such as the storage portion 6. In addition, some or all of the processing portions included in the control portion 7 may be constituted by electronic circuits. In addition, the document sheet conveyance program may be a program for causing a plurality of processors to function as the processing portions included in the control portion 7.

The detection processing portion 51 detects the size of the document sheet placed on the document sheet placing portion 21.

For example, the ADF 1 includes a pair of side cursors (not shown) for regulating the position of one or more document sheets placed on the document sheet placing portion 21 in a width direction orthogonal to the conveying direction D10. The pair of side cursors are provided so as to face each other in the width direction. Each of the side cursors is provided movably along the width direction. The pair of side cursors contact respective end portions in the width direction of one or more document sheets placed on the document sheet placing portion 21, thereby regulating the position in the width direction of the one or more document sheets.

In addition, the ADF 1 includes a signal output portion (not shown) for outputting an electric signal corresponding to the separation distance between the pair of side cursors.

The detection processing portion 51 determines the size of the document sheet placed on the document sheet placing portion 21 based on the electric signal output from the signal output portion.

The second determination processing portion 52 determines whether or not the length in the conveying direction D10 of the document sheet placed on the document sheet placing portion 21 is greater than or equal to a predetermined specific value.

The specific value is set based on the distance from the application position P0 (see FIG. 2) to the second detection position P2 (see FIG. 2) on the conveying path of the document sheet conveyed by the ADF 1. Specifically, the specific value is set to a value greater than the distance from the application position P0 to the second detection position P2.

For example, the second determination processing portion 52 determines whether or not the length in the conveying direction D10 of the document sheet placed on the document sheet placing portion 21 is greater than or equal to the specific value based on the result of the detection by the detection processing portion 51.

It is noted that the second determination processing portion 52 may determine whether or not the length in the conveying direction D10 of the document sheet placed on the document sheet placing portion 21 is greater than or equal to the specific value based on the size of the document sheet corresponding to the document sheet placing portion 21 set in advance by a user operation. In this case, the control portion 7 does not have to include the detection processing portion 51.

The sheet feed processing portion 53 executes the first sheet feed processing (an example of the sheet feed processing of the present disclosure) for rotating the pickup roller 24, the sheet feed belt 25, and the separation roller 26 in the first direction D1, the second direction D2, and the fourth direction D4, respectively.

Specifically, when a document sheet placed on the document sheet placing portion 21 is lifted by the lift plate 22, the sheet feed processing portion 53 starts the first sheet feed processing. That is, the sheet feed processing portion 53 drives the sheet feed motor 31. In addition, when the second sheet sensor 33 detects that the leading edge in the conveying direction D10 of the document sheet to be fed has passed through the second detection position P2 (see FIG. 2), the sheet feed processing portion 53 terminates the first sheet feed processing. That is, the sheet feed processing portion 53 stops the sheet feed motor 31.

The first determination processing portion 54 determines whether or not the leading edge in the conveying direction D10 of the document sheet conveyed by the first sheet feeding processing has passed through the sheet feed nip portion 26A (see FIG. 2).

For example, the first determination processing portion 54 uses the first sheet sensor 32 to determine whether or not the leading edge in the conveying direction D10 of the document sheet conveyed by the first sheet feed processing has passed through the sheet feed nip portion 26A. That is, when the first sheet sensor 32 detects that the leading edge in the conveying direction D10 of the document sheet to be fed has passed through the first detection position P1 (see FIG. 2), the first determination processing portion 54 determines that the leading edge has passed through the sheet feed nip portion 26A.

It is noted that the first determination processing portion 54 may determine that the leading edge in the conveying direction D10 of the document sheet conveyed by the first sheet feed processing has passed through the sheet feed nip portion 26A when a predetermined specific time has elapsed from the start of the first sheet feed processing. The specific time is a time set based on a time obtained by dividing a document sheet conveyance distance from the position of the leading edge in the conveying direction D10 of the document sheet placed on the document sheet placing portion 21 to the sheet feed nip portion 26A by a document sheet conveying speed of the pickup roller 24.

When the first determination processing portion 54 determines that the leading edge in the conveying direction D10 of the document sheet has passed through the sheet feed nip portion 26A, the stop processing portion 55 temporarily stops the first sheet feed processing. That is, the stop processing portion 55 temporarily stops the sheet feed motor 31.

The lowering processing portion 56 lowers the lift plate 22 by a predetermined lowering amount after the first determination processing portion 54 determines that the leading edge in the conveying direction D10 of the document sheet has passed through the sheet feed nip portion 26A and before the first sheet feed processing is completed.

For example, the lowering processing portion 56 lowers the lift plate 22 while the first sheet feed processing is stopped by the stop processing portion 55. The stop of the first sheet feed processing by the stop processing portion 55 is released after the lowering of the lift plate 22 by the lowering processing portion 56 is completed. As a result, compared to a configuration in which the lift plate 22 is lowered while the pickup roller 24 is rotating, when the document sheet is thick, the trailing edge of the document sheet is prevented from passing through the application position P0 between the time when it is determined that the leading edge of the document sheet has passed through the sheet feed nip portion 26A and the time when the pickup roller 24 separates from the document sheet.

It is noted that the lowering processing portion 56 may lower the lift plate 22 when the first determination processing portion 54 determines that the leading edge in the conveying direction D10 of the document sheet has passed through the sheet feed nip portion 26A. In other words, the lowering processing portion 56 may lower the lift plate 22 while the pickup roller 24 is rotating. In this case, the control portion 7 may not include the stop processing portion 55.

Here, when the second determination processing portion 52 determines that the length of the document sheet in the conveying direction D10 is equal to or greater than the specific value, the lowering processing portion 56 does not lower the lift plate 22. Thus, the lift plate 22 is prevented from being lowered even when the trailing edge of the document sheet to be fed has not passed through the position P0 (see FIG. 2), where the pickup roller 24 applies the conveying force to the document sheet, at the end of the first sheet feed processing.

It is noted that the control portion 7 may activate or deactivate the function of the lowering processing portion 56 in accordance with a predetermined user operation. In this case, the lowering processing portion 56 may lower the lift plate 22 regardless of the length of the document sheet in the conveying direction D10 when the function of the lowering processing portion 56 is activated.

The setting processing portion 57 sets the amount of lowering of the lift plate 22 by the lowering processing portion 56 in accordance with a predetermined setting operation.

For example, in response to a predetermined user operation on the operation display portion 5, the setting processing portion 57 causes the operation display portion 5 to display a lowering amount setting screen for receiving the setting operation. On the lowering amount setting screen, the lowering amount of the lift plate 22 can be arbitrarily set. For example, on the lowering amount setting screen, the lowering amount of the lift plate 22 can be set in three stages of "large", "medium", and "small". Thus, it is possible to adjust the lowering amount of the lift plate 22 in accordance with the thickness of the document sheet to be fed.

It is noted that, when the lowering amount of the lift plate 22 is not set by the setting operation, the lowering processing portion 56 may lower the lift plate 22 by a preset initial lowering amount.

### [Document Sheet Conveying Processing]

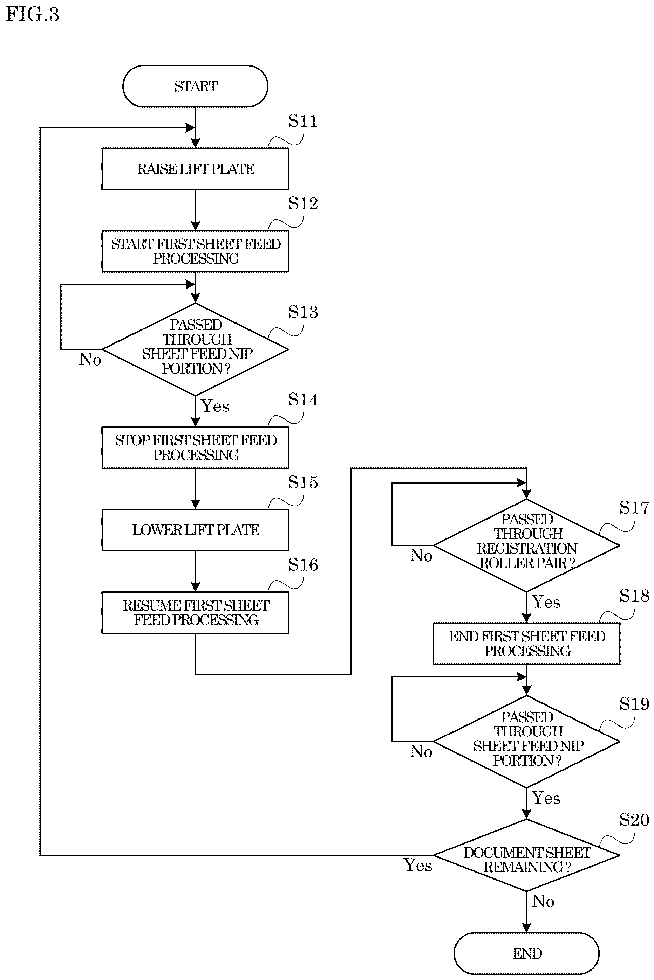

Hereinafter, a sheet conveying method of the present disclosure will be described with reference to FIG. 3, along with an example of the procedure of the document sheet conveying processing executed by the control portion 7 in the image forming apparatus 100. Here, steps S11, S12, ... represent the numbers of the processing procedure (steps) executed by the control portion 7.

It is noted that the detection processing portion 51 detects the size of the document sheet placed on the document sheet placing portion 21 when an instruction to execute image reading processing for reading an image of the document sheet conveyed by the ADF1 is input. In addition, the second determination processing portion 52 determines whether or not the length in the conveying direction D10 of the document sheet placed on the document sheet placing portion 21 is greater than or equal to the specific value based on the result of the detection by the detection processing portion 51. In addition, when the second determination processing portion 52 determines that the length in the conveying direction D10 of the document sheet is less than the specific value, the control portion 7 executes the document sheet conveying processing. That is, the document sheet conveying processing is executed when an instruction to execute the image reading processing is input and the length in the conveying direction D10 of the document sheet placed on the document sheet placing portion 21 is less than the specific value.

### <Step S11>

First, in step S11, the control portion 7 drives the lift motor 30 to raise the lift plate 22 until the uppermost document sheet of one or more document sheets placed on the document sheet placing portion 21 comes into contact with the pickup roller 24.

### <Step S12>

In step S12, the control portion 7 starts the first sheet feed processing. That is, the control portion 7 drives the sheet feed motor 31. Here, the process of step S12 is an example of the sheet feed step of the present disclosure, and is executed by the sheet feed processing portion 53 of the control portion 7.

### <Step S13>

In step S13, the control portion 7 determines whether or not the leading edge of the document sheet conveyed by the first sheet feed processing has passed through the sheet feed nip portion 26A (see FIG. 2). The process of step S13 is an example of the determination step of the present disclosure, and is executed by the first determination processing portion 54 of the control portion 7.

Specifically, when the first sheet sensor 32 detects that the leading edge of the document sheet has passed through the first detection position P1 (see FIG. 2), the control portion 7 determines that the leading edge has passed through the sheet feed nip portion 26A.

When the control portion 7 determines that the leading edge of the document sheet has passed through the sheet feed nip portion 26A (Yes in S13), the control portion 7 shifts the processing to step S14. When the leading edge of the document sheet has not passed through the sheet feed nip portion 26A (No in S13), the control portion 7 waits for the leading edge of the document sheet to pass through the sheet feed nip portion 26A in step S13.

### <Step S14>

In step S14, the control portion 7 stops the first sheet feed processing. That is, the control portion 7 stops the sheet feed motor 31. The process of step S14 is executed by the stop processing portion 55 of the control portion 7.

### <Step S15>

In step S15, the control portion 7 drives the lift motor 30 to lower the lift plate 22 by a predetermined lowering amount (the lowering amount set by the setting operation or the initial lowering amount). The process of step S15 is an example of the lowering step of the present disclosure, and is executed by the lowering processing portion 56 of the control portion 7.

### <Step S16>

In step S16, the control portion 7 resumes the first sheet feed processing after the process of step S15 has been completed. That is, the control portion 7 drives the sheet feed motor 31. The process of step S16 is executed by the stop processing portion 55 of the control portion 7.

### <Step S17>

In step S17, the control portion 7 determines whether or not the leading edge of the document sheet conveyed by the first sheet feed processing has passed through the registration roller pair 27 (see FIG. 2).

Specifically, when the second sheet sensor 33 detects that the leading edge of the document sheet has passed through the second detection position P2 (see FIG. 2), the control portion 7 determines that the leading edge has passed through the registration roller pair 27.

When the control portion 7 determines that the leading edge of the document sheet has passed through the registration roller pair 27 (Yes in S17), the control portion 7 shifts the processing to step S18. In addition, when the leading edge of the document sheet has not passed through the registration roller pair 27 (No in step S17), the control portion 7 waits for the leading edge of the document sheet to pass through the registration roller pair 27 in step S17.

### <Step S18>

In step S18, the control portion 7 terminates the first sheet feed processing. That is, the control portion 7 stops the sheet feed motor 31. The process of step S18 is executed by the sheet feed processing portion 53 of the control portion 7.

The document sheet fed by the first sheet feed processing is conveyed along the document sheet conveying path 23A by the registration roller pair 27 and the plurality of conveying roller pairs 28 after the first sheet feed processing has been completed. Then, the image on the front surface of the conveyed document sheet is read by the first imaging portion 42. In addition, the image on the back surface of the conveyed document sheet is read by the second imaging portion 43.

### <Step S19>

In step S19, the control portion 7 determines whether or not the trailing edge of the document sheet conveyed by the registration roller pair 27 has passed through the sheet feed nip portion 26A (see FIG. 2).

Specifically, when the first sheet sensor 32 detects that the trailing edge of the document sheet has passed through the first detection position P1 (see FIG. 2), the control portion 7 determines that the trailing edge has passed through the sheet feed nip portion 26A.

When the control portion 7 determines that the trailing edge of the document sheet has passed through the sheet feed nip portion 26A (Yes in S19), the control portion 7 shifts the processing to step S20. In addition, when the trailing edge of the document sheet has not passed through the sheet feed nip portion 26A (No in S19), the control portion 7 waits for the trailing edge of the document sheet to pass through the sheet feed nip portion 26A in step S19.

### <Step S20>

In step S20, the control portion 7 determines whether or not any document sheet remains on the document sheet placing portion 21.

For example, the control portion 7 uses a sensor (not shown) capable of detecting the presence or absence of a document sheet on the document sheet placing portion 21 to determine whether or not a document remains on the document sheet placing portion 21.

When the control portion 7 determines that a document sheet remains on the document sheet placing portion 21 (Yes in S20), the control portion 7 shifts the processing to step S11. In addition, when no document sheet remains on the document sheet placing portion 21 (No in S20), the control portion 7 terminates the document sheet conveying processing.

As described above, in the image forming apparatus 100, the lift plate 22 is lowered during execution of the first sheet feed processing. Accordingly, when a next document sheet is attached to a document sheet to be fed, the next document sheet can be separated from the document sheet to be fed at the sheet feed nip portion 26A, as compared with the sheet conveying device according to the related art described above, in which the lift plate 22 is lowered during execution of the second sheet feed processing. Therefore, it is possible to prevent the next document sheet of the document sheet to be fed from being conveyed beyond the sheet feed nip portion 26A.

### [Appendixes to Disclosure]

The following are appendixes to the overview of the disclosure extracted from the above embodiment. It is noted that the structures and processing functions to be described in the following appendixes can be selected and combined arbitrarily.

### <Appendix 1 >

A sheet conveying device comprising: a sheet placing portion on which a sheet is placed; a lift portion provided so as to be able to move up and down in the sheet placing portion and configured to lift the sheet placed on the sheet placing portion; a pickup roller provided above the sheet placing portion and configured to rotate in a first direction capable of conveying an uppermost sheet of one or more sheets lifted by the lift portion in a predetermined conveying direction; a conveying member provided so as to be able to come into contact with an upper surface of the sheet downstream of the pickup roller in the conveying direction and configured to rotate in a second direction capable of conveying the sheet conveyed by the pickup roller in the conveying direction; a separation roller forming, together with the conveying member, a sheet feed nip portion therebetween and configured to rotate in a fourth direction opposite to a third direction capable of conveying the sheet conveyed by the pickup roller in the conveying direction; a sheet feed processing portion configured to execute sheet feed processing for rotating the pickup roller, the conveying member, and the separation roller in the first direction, the second direction, and the fourth direction, respectively; a first determination processing portion configured to determine whether or not a leading edge in the conveying direction of the sheet conveyed by the sheet feed processing has passed through the sheet feed nip portion; and a lowering processing portion configured to lower the lift portion after the first determination processing portion determines that the leading edge in the conveying direction of the sheet has passed through the sheet feed nip portion and before the sheet feed processing is completed.

### <Appendix 2>

The sheet conveying device according to Appendix 1, further comprising: a second determination processing portion configured to determine whether or not a length in the conveying direction of the sheet placed on the sheet placing portion is equal to or greater than a predetermined specific value, wherein the lowering processing portion refrains from lowering the lift portion when the second determination processing portion determines that the length in the conveying direction of the sheet is equal to or greater than the specific value.

### <Appendix 3>

The sheet conveying device according to Appendix 2, further comprising: a detection processing portion configured to detect a size of the sheet placed on the sheet placing portion, wherein the second determination processing portion determines whether or not the length in the conveying direction of the sheet placed on the sheet placing portion is equal to or greater than the specific value based on a result of the detection by the detection processing portion.

### <Appendix 4>

The sheet conveying device according to any one of Appendixes 1 to 3, wherein the lowering processing portion lowers the lift portion when the first determination processing portion determines that the leading edge in the conveying direction of the sheet has passed through the sheet feed nip portion.

### <Appendix 5>

The sheet conveying device according to any one of Appendixes 1 to 3, further comprising a stop processing portion configured to temporarily stop the sheet feed processing when the first determination processing portion determines that the leading edge in the conveying direction of the sheet has passed through the sheet feed nip portion, wherein the lowering processing portion lowers the lift portion while the sheet feed processing is stopped.

### <Appendix 6>

The sheet conveying device according to any one of Appendixes 1 to 5, further comprising a sheet sensor configured to detect the sheet downstream of the sheet feed nip portion in the conveying direction, wherein the first determination processing portion uses the sheet sensor to determine whether or not the leading edge in the conveying direction of the sheet conveyed by the sheet feed processing has passed through the sheet feed nip portion.

### <Appendix 7>

The sheet conveying device according to any one of Appendixes 1 to 6, further comprising a setting processing portion configured to set an amount of lowering of the lift portion by the lowering processing portion in accordance with a predetermined setting operation.

### <Appendix 8>

An image processing apparatus comprising: the sheet conveying device according to any one of Appendixes 1 to 7; and an image reading portion configured to read an image of the sheet conveyed by the sheet conveying device.

### <Appendix 9>

A sheet conveying method executed by a sheet conveying device comprising: a sheet placing portion on which a sheet is placed; a lift portion provided so as to be able to move up and down in the sheet placing portion and configured to lift the sheet placed on the sheet placing portion; a pickup roller provided above the sheet placing portion and configured to rotate in a first direction capable of conveying an uppermost sheet of one or more sheets lifted by the lift portion in a predetermined conveying direction; a conveying member provided so as to be able to come into contact with an upper surface of the sheet downstream of the pickup roller in the conveying direction and configured to rotate in a second direction capable of conveying the sheet conveyed by the pickup roller in the conveying direction; a separation roller forming, together with the conveying member, a sheet feed nip portion therebetween and configured to rotate in a fourth direction opposite to a third direction capable of conveying the sheet conveyed by the pickup roller in the conveying direction, the sheet conveying method comprising: a sheet feed step of executing sheet feed processing for rotating the pickup roller, the conveying member, and the separation roller in the first direction, the second direction, and the fourth direction, respectively; a determination step of determining whether or not a leading edge in the conveying direction of the sheet conveyed by the sheet feed processing has passed through the sheet feed nip portion; and a lowering step of lowering the lift portion after it is determined in the determination step that the leading edge in the conveying direction of the sheet has passed through the sheet feed nip portion and before the sheet feed processing is completed.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A sheet conveying device comprising:
a sheet placing portion (21) on which a sheet is placed;
a lift portion (22) provided so as to be able to move up and down in the sheet placing portion (21) and configured to lift the sheet placed on the sheet placing portion (21);
a pickup roller (24) provided above the sheet placing portion (21) and configured to rotate in a first direction (D1) capable of conveying an uppermost sheet of one or more sheets lifted by the lift portion (22) in a predetermined conveying direction (D10);
a conveying member (25) provided so as to be able to come into contact with an upper surface of the sheet downstream of the pickup roller (24) in the conveying direction (D10) and configured to rotate in a second direction (D2) capable of conveying the sheet conveyed by the pickup roller (24) in the conveying direction (D10);
a separation roller (26) forming, together with the conveying member (25), a sheet feed nip portion (26A) therebetween and configured to rotate in a fourth direction (D4) opposite to a third direction (D3) capable of conveying the sheet conveyed by the pickup roller (24) in the conveying direction (D10);
a sheet feed processing portion (53) configured to execute sheet feed processing for rotating the pickup roller (24), the conveying member (25), and the separation roller (26) in the first direction (D1), the second direction (D2), and the fourth direction (D4), respectively;
a first determination processing portion (54) configured to determine whether or not a leading edge in the conveying direction (D10) of the sheet conveyed by the sheet feed processing has passed through the sheet feed nip portion (26A); and
a lowering processing portion (56) configured to lower the lift portion (22) after the first determination processing portion (54) determines that the leading edge in the conveying direction (D10) of the sheet has passed through the sheet feed nip portion (26A) and before the sheet feed processing is completed.

2. The sheet conveying device according to claim 1, further comprising:
a second determination processing portion (52) configured to determine whether or not a length in the conveying direction (D10) of the sheet placed on the sheet placing portion (21) is equal to or greater than a predetermined specific value, wherein
the lowering processing portion (56) refrains from lowering the lift portion (22) when the second determination processing portion (52) determines that the length in the conveying direction (D10) of the sheet is equal to or greater than the specific value.

3. The sheet conveying device according to claim 2, further comprising:
a detection processing portion (51) configured to detect a size of the sheet placed on the sheet placing portion (21), wherein
the second determination processing portion (52) determines whether or not the length in the conveying direction (D10) of the sheet placed on the sheet placing portion (21) is equal to or greater than the specific value based on a result of the detection by the detection processing portion (51).

4. The sheet conveying device according to any one of claim 1 to 3, wherein
the lowering processing portion (56) lowers the lift portion (22) when the first determination processing portion (54) determines that the leading edge in the conveying direction (D10) of the sheet has passed through the sheet feed nip portion (26A).

5. The sheet conveying device according to any one of claim 1 to 3, further comprising:
a stop processing portion (55) configured to temporarily stop the sheet feed processing when the first determination processing portion (54) determines that the leading edge in the conveying direction (D10) of the sheet has passed through the sheet feed nip portion (26A), wherein
the lowering processing portion (56) lowers the lift portion (22) while the sheet feed processing is stopped.

6. The sheet conveying device according to any one of claim 1 to 5, further comprising:
a sheet sensor (32) configured to detect the sheet downstream of the sheet feed nip portion (26A) in the conveying direction (D10), wherein
the first determination processing portion (54) uses the sheet sensor (32) to determine whether or not the leading edge in the conveying direction (D10) of the sheet conveyed by the sheet feed processing has passed through the sheet feed nip portion (26A).

7. The sheet conveying device according to any one of claim 1 to 6, further comprising:
a setting processing portion (57) configured to set an amount of lowering of the lift portion (22) by the lowering processing portion (56) in accordance with a predetermined setting operation.

8. An image processing apparatus (100) comprising:
the sheet conveying device according to any one of claim 1 to 7; and
an image reading portion (2) configured to read an image of the sheet conveyed by the sheet conveying device.

9. A sheet conveying method executed by a sheet conveying device comprising: a sheet placing portion (21) on which a sheet is placed; a lift portion (22) provided so as to be able to move up and down in the sheet placing portion (21) and configured to lift the sheet placed on the sheet placing portion (21); a pickup roller (24) provided above the sheet placing portion (21) and configured to rotate in a first direction (D1) capable of conveying an uppermost sheet of one or more sheets lifted by the lift portion (22) in a predetermined conveying direction (D10); a conveying member (25) provided so as to be able to come into contact with an upper surface of the sheet downstream of the pickup roller (24) in the conveying direction (D10) and configured to rotate in a second direction (D2) capable of conveying the sheet conveyed by the pickup roller (24) in the conveying direction (D10); a separation roller (26) forming a sheet feed nip portion (26A) with the conveying member (25) and configured to rotate in a fourth direction (D4) opposite to a third direction (D3) capable of conveying the sheet conveyed by the pickup roller (24) in the conveying direction (D10), the sheet conveying method comprising:
executing sheet feed processing for rotating the pickup roller (24), the conveying member (25), and the separation roller (26) in the first direction (D1), the second direction (D2), and the fourth direction (D4), respectively;
determining whether or not a leading edge in the conveying direction (D10) of the sheet conveyed by the sheet feed processing has passed through the sheet feed nip portion (26A); and
lowering the lift portion (22) after it is determined that the leading edge in the conveying direction (D10) of the sheet has passed through the sheet feed nip portion (26A) and before the sheet feed processing is completed.
